# EUROPEAN PATENT SPECIFICATION

(11) **EP 4 049 540 B1**
(45) Date of publication and mention of the grant of the patent: **03.07.2024**
(21) Application number: 21198080.0
(22) Date of filing: 21.09.2021
(51) Int. Cl.: A23K 20/147, A23K 50/80, A23K 40/10, A23K 40/25, A23K 40/30, A23K 10/37, A23K 20/10

(54) **AQUACULTURE FEED COMPOSITION COMPRISING CHARCOAL AND ITS USE**
AQUAKULTUR-FUTTERZUSAMMENSETZUNG MIT KOHLE UND IHRE VERWENDUNG
COMPOSITION D'ALIMENT POUR AQUACULTURE COMPRENANT DU CHARBON ET SON UTILISATION

(30) Priority: 25.02.2021 EP 21159371
(43) Date of publication of application: 31.08.2022
(73) Proprietor: Nutreco IP Assets B.V., 5831 JN Boxmeer (NL); Skretting Aquaculture Research Centre AS, 4002 Stavanger (NO)
(72) Inventor: Dhert, Philippe, 9550 Steenhuize-Winjhuize (BE); Chua, Seong-Chea, 4072 RANDABERG (NO); Rosenlund, Grethe, 4011 STAVANGER (NO)
(74) Representative: Håmsø Patentbyrå AS

(56) References cited:
- LAN TRINH THI ET AL: "Feeding biochar or charcoal increased the growth rate of striped catfish (Pangasius hypophthalmus) and improved water quality", LIVESTOCK RESEARCH FOR RURAL DEVELOPMENT , vol. 28, no. 5 1 January 2016 (2016-01-01), pages 1-6, XP055824493, Retrieved from the Internet: URL:http://www.lrrd.cipav.org.co/lrrd28/5/ lan28084.html [retrieved on 2021-07-14]
- RAWNAK JAHAN ET AL: "Dietary added bamboo charcoal can evoke Pangasianodon growth and can reduce ammonia from culture medium", INTERNATIONAL JOURNAL OF FISHERIES AND AQUACULTURE , vol. 6, no. 7 1 July 2014 (2014-07-01), pages 87-93, XP055824566, DOI: 10.5897/IJFA2014.0416 Retrieved from the Internet: URL:https://pdfs.semanticscholar.org/fbd9/ 4a3c599b6ff742c917412a13e95b1620c591.pdf
- Anonymous: "Livestock and Fisheries Applications", , 21 October 2020 (2020-10-21), XP055824477, Retrieved from the Internet: URL:https://web.archive.org/web/2020102101 1619/https://naratanka.com/en/livestock-fi sheries/ [retrieved on 2021-07-14]

## Description

### Technical field

The invention relates to the field of aquaculture feed compositions and to the field of feeding and farming of aquatic organisms including fish, such as seabream and crustaceans, such as shrimp. More particular, the present invention relates to aquaculture hatchery feed compositions, which may be suitable for feeding fish larvae and/or shrimp larvae. Provided is an aquaculture feed composition in the form of granules and having specific dimensions while comprising high wt. % of protein and a source of charcoal.

### Background art

The background description includes information that may be useful in understanding the invention. It is not an admission that any of the information provided herein is prior art or relevant to the presently claimed invention, or that any publication specifically or implicitly referenced is prior art.

Aquaculture, also known as aquafarming, relates to the farming of aquatic animals and plants, including algae. Aquaculture is a diverse and rapidly developing industry which is becoming an increasing factor in the supply of protein source for human consumption.

A hatchery is a place for artificial breeding, hatching, and rearing through the early life stages of animals-fish and shrimp in particular. Hatcheries produce larval and juvenile fish, shellfish, and crustaceans, that may subsequently be transferred to on-growing systems, such as fish farms, to reach harvest size.

One of the challenges in aquaculture relates to the high mortality rates that are often observed during rearing, during the hatchery phase. For example, it has been reported that above 50% of hatchery-reared larval marine fish may die in their early life stages. Reducing death of hatchery-reared larvae may increase overall production and reduce costs in aquaculture.

There is a constant need to further improve aquaculture feed compositions. It has, for example, been suggested that in the case of feed pellets due to size of the pellets vitamins and amino acids may rapidly leach away from the pellets into the water. Improvement of aquaculture feeds intended for early life are expected to lead to better availability of critical nutrients and vitamins for the animals, to decreased mortality, to improved feed-conversion rates and/or yield.

Many aquaculture feeds comprise fish- and/or algae meal as an important constituent. The increasing demand for aquaculture feeds in combination with the prospected scarcity of fish- and/or algae meal is placing a pressure on the future availability of sufficient, high-quality and reasonably prized feeds. To this end it is important to develop feed compositions that depend on fish- and/or algae meal but that reduce mortality and/or improve yield of the reared aquatic animals.

Finally, it is important that the aquaculture feed compositions are not only of high quality for the aquatic animals, but it is equally important that the aquatic feed compositions can be handled by the farmer in a manner that allows for reliable and hygienic provision of the aquaculture feed to the aquatic animals. Improvement in the quality of husbandry and biosecurity management is considered an important factor in reducing the risk for disease.

However, development of such aquaculture feed compositions is hindered by the complex interplay between the many different requirements for high-quality aquaculture feeds (nutritional and economic considerations, husbandry, biosecurity, biological and physiological considerations, and feed handling characteristics). This makes the development of aquaculture feed compositions a self-standing technical field with its own specific considerations and requirements, and which field can only limited benefit from developments in other fields such as in the field of land animal feeds (stock, pig and cows).

Lan et al compared the effect of adding biochar to fish feed, charcoal to fish feed, biochar in the water and charcoal in the water on growth of striped catfish fingerlings (10g). (Lan et al. 2016. Feeding biochar or charcoal increased the growth rate of striped catfish (*Pan-gasius hypophthalmus*) and improved water quality. Livestock Research for Rural Dev. 28 (5) pp. 1-6). Jahan et al. fed bamboo charcoal to pangasiid catfish fingerlings (5g) and measured growth performance and ammonia excretion. (Jahan et al. 2014. Dietary added bamboo charcoal can evoke Pangasianodon growth and can reduce ammonia from culture medium. Int. J. Fisheries and Aqua. 6 (7) pp. 87-93). Charcoal has been added to feed for poultry and pig. (Anonymous. 2020. Livestock and Fisheries Applications. Nara Tanka Industries).

In light of this, new products, compositions, methods and uses for aquaculture feed compositions, in particular for feeding early life fish and shrimp larvae, would be highly desirable. In particular, there is a clear need in the art for reliable, efficient and reproducible products, compositions, methods and uses that allow to be used in the rearing of aquatic animals, in particular larvae of fish and shrimp. Accordingly, the technical problem underlying the invention can been seen in the provision of such products, compositions, methods and uses for complying with any of the aforementioned needs, in particular for use in the rearing of fish and/or shrimp larvae. The technical problem is solved by the embodiments characterized in the claims and herein below.

### Description of the invention

### Definitions

A portion of this disclosure contains material that is subject to copyright protection (such as, but not limited to, diagrams, device photographs, or any other aspects of this submission for which copyright protection is or may be available in any jurisdiction.). The copyright owner has no objection to the facsimile reproduction by anyone of the patent document or patent disclosure, as it appears in the Patent Office patent file or records, but otherwise reserves all copyright rights whatsoever.

Various terms relating to the compositions, methods and uses and other aspects of the invention are used throughout the specification and claims. Such terms are to be given their ordinary meaning in the art to which the invention pertains, unless otherwise indicated.

Other specifically defined terms are to be construed in a manner consistent with the definition provided herein. Although any methods and materials similar or equivalent to those described herein can be used in the practice for testing of the invention, the preferred materials and methods are described herein. For purposes of the invention, the following terms are defined below.

As used herein, the singular forms "a," "an" and "the" include plural referents, unless the context clearly dictates otherwise. For example, a fish larvae or a shrimp larvae refers to at least one or more (for example 10, 100, 1.000, 10.000, 100.000 etc.), fish larvae or shrimp larvae. In a similar way, a feed composition in the form of a pellet refers to at least one or more of such pellets.

The terms "about" and "approximately", when referring to a measurable value such as an amount, a size, and the like, is meant to encompass variations of ±20% or ±10%, more preferably ±5%, even more preferably ±1% and still more preferably ±0.1% from the specified value, as such variations are appropriate to the compositions provided herein.

As used herein, the term "and/or" indicates that one or more of the stated cases may occur, alone or in combination with at least one of the stated cases, up to with all of the stated cases.

As used herein the term "aquaculture" refers to the farming of larvae of a fish or a shrimp.

As used herein, the term "aquaculture feed composition" thus refers to a composition comprising one or more nutrients, for example protein, carbohydrates such as fibres and/or starch, fat, minerals, and vitamins, intended to sustain life of a fish larva or shrimp larva. Within the context of the current invention an aquaculture feed composition may also be referred to as "feed" or "composition" or the like. The aquaculture feed composition must be suitable for feeding the fish and/or shrimp larvae. This includes the feed composition being suitable for use in water in a manner that it can function as a feed to the aquatic animal. The aquaculture feed composition may be suitable as the sole feed providing nutrition to the aquatic animals or may be combined with other feeds or supplements, or live feeds or *Artemia.*

As used herein, the term "at least" a particular value means that particular value or more. For example, "at least 2" is understood to be the same as "2 or more" i.e., 2, 3, 4, 5, 6, 7, 8, 9, 10, 11, 12, 13, 14, 15, ..., etc.

As used herein the term "larva", plural "larvae", refers to the distinct juvenile form of an animal often prior to metamorphosis into adult animals. In particular as used herein the term "larva" is used to refer to the juvenile form of a fish or a shrimp. A skilled person is familiar with the development cycle of a fish and/or a shrimp and is able to identify the larvae of a fish and/or a shrimp.

As used herein the term "pellets" is used interchangeably with the term "granules" and refers to particles comprising the aquaculture feed composition. In other words, the aquaculture feed composition is formed into a sizeable formed mass. The pellet may be obtained by compressing techniques but may alternatively be obtained by, for example, extrusion, and the additional use of binders that keep the various constituents of the aquaculture feed composition together. The pellet may itself also comprise smaller particles, either of the same or of different size. The pellet may have any form, for example it may be round, oval, square or elongated (grain-like). The pellet may, for example, and in a preferred embodiment, be obtained by extrusion, i.e. by a process where a blend of materials are conveyed through a cylinder by the action of one or multiple rotating screws followed by pushing this material through one or multiple holes and cutting it into smaller fractions, i.e. an extruder. In other words, the pellet may be an extruded pellet. If the process is carried out at a temperature above the boiling point of water, the pellet may be referred to as a cooking extruded pellet.

As used the terms "protein" or "crude protein" are interchangeable and refer to the amount of protein that is included in the aquaculture feed composition. Crude protein depends on the nitrogen content of the feed proteins and crude protein measurements is common in fields of animal husbandry and feed science. One well-known method commonly used in the field is the Kjeldahl method (see, e.g., AOAC, 2000). In animal feeds, crude protein is calculated as mineral nitrogen x 6.25 (the assumption is that proteins of typical animal feeds contain 16% nitrogen in average). The mineral nitrogen value may be obtained by the Kjeldahl method. As used herein "protein" or "crude protein" thus refers to the overarching term for this nutrient that can exist is various different forms.

As used herein the term "fat" includes fatty acid containing compounds, including, without limitation, tri-, di-, or monoglycerides of fatty acids, as well as free fatty acids, and salts and esters thereof. The skilled person knows how to determine fat content of a composition. Preferably the fat content of the composition of the invention is the fat content as measured after acid hydrolysis, e.g., by the method indicated herein.

As used herein the term "size" refers to the relative extent of the aquaculture feed composition in the form of a pellet/granule. In particular, "size" as used herein refers to the relative extent of a single pellet/granule of the aquaculture feed composition. For example, a size of 500 micrometre or less refers to a particle/granule having a maximal diameter of 500 micrometre or less. In cases wherein more than one pellet/granule is provided, preferably a substantial part of all pellets have the specified diameter, or less. For example, at least 10%, 20%, 30% ... 70%, 75%, 80%, 85%, 90%, 95% by weight of the pellets have the specified diameter, or less. The skilled person is well-aware on methods for determining the diameter of the pellet/granule. A non-limiting example is by using sieves of the appropriate size and collecting pellet that pass.

When herein reference is made to a percentage by weight (wt.%), this is to indicate the percentage of weight based on dry weight of the composition (i.e., excluding water content) referred to, except for where it is clear from the context something else is indicated. As will be understood by the skilled person the compositions according to the invention may comprise moisture, for example a composition of the invention may comprise about 3 - 14 wt.% moisture (based on wet weight of the composition, i.e., on an as-is basis), for example, about 8 wt.% moisture (based on wet weight).

### Detailed description

It is contemplated that any method, use or composition described herein can be implemented with respect to any other method, use or composition described herein. Embodiments discussed in the context of methods, use and/or compositions of the invention may be employed with respect to any other method, use or composition described herein. Thus, an embodiment pertaining to one method, use or composition may be applied to other methods, uses and compositions of the invention as well.

As embodied and broadly described herein, the invention is directed to the surprising finding that an aquaculture feed composition can be provided that substantially increases survival of a larva of a fish and/or a shrimp, during rearing. Furthermore, it was surprisingly found that with the aquaculture feed composition substantial increase in feed intake by fish and/or shrimp larvae may be accomplished during stages of development. In particular, the increase in survival (or decrease in mortality) and/or increase in feed intake may be observed in comparison to standard aquaculture feed compositions.

In the accompanying examples it was surprisingly found that with the aquaculture feed composition survival of the larvae (either fish or shrimp larvae) used in the experiment was improved relative to standard aquaculture feed compositions around day 15 - 25 of the larvae, for example around day, 20, 19, 18, or 17 days. Feed-intake was also improved with the aquaculture feed composition of the invention at around the same days after hatching of the larva. A further interesting effect observed after feeding charcoal is that it has become much more easy to distinguish if the diet has been eaten or not. The contrast with live feed is much better.

In addition, it was surprisingly found that the aquaculture feed composition of the invention has physical characteristics that makes it in particular suitable for use as an aquaculture feed composition. The handling of the aquaculture feed composition is substantially improved compared to a preceding standard aquaculture feed composition.

It was for example found that, despite high (crude) protein content in the aquaculture feed composition, foam formation that normally occurs was reduced compared to control feeds. In addition, it was found that the aquaculture feed composition of the invention (i.e. in the form of pellets as defined herein) can be released in a constant manner from the devices used for feeding larvae of fish and/or shrimp. In contrast to a preceding standard aquaculture feed composition the aquaculture feed composition of the invention also shows improved sieving, in other words, the pellets of the composition of the invention exhibit improved free flowing characteristics and exhibits substantially less clogging of the device used for feeding (i.e. a feeder). In addition, it was found that the buoyancy of the diets with charcoal was changed compared to the buoyancy of comparable diets without charcoal. Thus, the pellets of the composition of the invention showed more particles floating at the surface of the water column. Particles on the bottom are not consumed by the larvae and are lost to the larvae, while particles at the surface will eventually absorb sufficient water to slowly sink and become available in the water column. This will create a continuous and longer availability of particles in the water column at all times.

This and more is also exemplified in the Examples as provided herein.

Therefore, and according to a first aspect, the invention provides for an aquaculture feed composition in the form of a granule, the granule having a size of less than 500 micrometre, and wherein the composition comprises more than 60 wt.% protein (based on dry weight) and further comprises charcoal. Said aquaculture feed composition may particularly be suitable for feeding fish larvae and/or shrimp larvae.

The aquaculture feed composition of the invention is provided in a form of a granule. The granule therefore comprises or consists of the aquaculture feed composition.

The granule has a size, as defined herein, of less than about 500 micrometres (µm; for example, as determined using sieves). Preferably the size of the granule is in the range of 10 - 400 micrometre, 50 - 350 micrometres, or 100 - 300 micrometre. Granules of such size are particularly suitable for feeding fish larvae and/or shrimp larvae.

In cases wherein more than one pellet comprising the aquaculture feed composition of the invention is provided, preferably a substantial part of all such pellets have the specified diameter, or less. For example, in some embodiments at least 10%, 20%, 30%, ..., 70%, 75%, 80%, 85%, 90%, 95% by weight of the pellets have the specified diameter, or less. In some embodiments more than 70% by weight of said pellets has a size which is in range of 100 - 300 micrometres. For example, more than 70 % by weight of said pellets may have a size between 0 -100 micrometre, 100-200 micrometre and/or 200-350 micrometre. The skilled person knows how, in the field, the size of the pellets of the invention may be determined.

The aquaculture feed composition of the invention comprises more than 60 wt. % protein. The amount of protein in the aquaculture feed composition is no less than 60 wt.%, for example, but not limited to, about 60, 61, 62, 63, 65, 67.5, 70, 75, 70, 85, or 90 wt.%. Preferably, the composition comprises more than about 62 wt.% protein. More preferably the composition comprises less than about 85 wt. % protein, less than about 75 wt.% protein, or less than about 70 wt. % protein. Most preferably, the amount of protein of the aquaculture feed composition is about 60 - 67 wt.% protein.

The protein used in the composition of the invention may be any type of suitable protein. The skilled person knows that protein may be used in the context of the current invention. Non-limitative, but in some embodiments preferred, examples of suitable protein sources include marine protein such as fishmeal, alga meal and krill meal, vegetable protein such as soy meal, rape seed meal, wheat gluten, corn gluten, lupine meal, pea meal, sunflower seed meal and rice meal, and slaughterhouse waste such as blood meal, bone meal, feather meal and chicken meal. By mixing different protein sources it is possible within certain limits to achieve a desired amino acid profile in the feed adapted to the species of aquatic organism the feed is intended for.

The aquaculture feed composition of the invention further comprises charcoal (may also be referred to as carbon or coal). Charcoal is a black carbon residue produced by exposing animal or plant materials to a strong heat source. Charcoal is commonly known to be used for many different applications, such as fuel, cosmetics, art, and purification purposes. Preferably the charcoal used in the invention is vegetal charcoal. Preferably the charcoal used in the invention is not activated charcoal (activated coal). Preferably the charcoal used in the invention has a surface area of between 75 - 600 m2/g, preferably of between 150 - 300 m2/g. Preferably the charcoal used in the invention has a size of between 10 and 200 micrometres. In the source of charcoal, preferably, at least 50 wt.%, 60 wt.%, 70 wt.%, 80 wt.%, or 90 wt.% of the charcoal has a surface area and/or a size as disclosed herein.

In a preferred embodiment of the invention, the aquaculture feed composition comprises at least 0.1 wt.% charcoal, at least 0.5 wt.% charcoal, at least 1.0 wt.% charcoal, at least 1.5 wt.% charcoal, or at least 2.2 wt.% charcoal. Preferably, the composition comprises less than 11 wt.% charcoal or less than 8 wt.% charcoal. For example, the composition comprises about 2-8 wt.%, for example about 5 wt.% charcoal.

In some embodiments, the aquaculture feed composition of the invention comprises fat. It is a preferred embodiment of the invention that the composition comprises less than 30 wt.% fat, preferably less than 27 wt.% fat, even more preferably less than 25 wt.% fat. Preferably, the composition comprises between 5 - 22 wt.% fat, between 8 - 20 wt.% fat, between 10-15 wt.% fat, between 11- 14 wt.% fat, such as between 12 - 13 wt.% fat. The skilled person knows how to determine the fat content of a feed composition. For example, the fat content of a feed composition may be determined by the NMKL method No. 160. E.g., a feed sample may be boiled in diluted hydrochloric acid in order to digest protein, liberate bound fat and to convert salts of fatty acids to free fatty acids. The digestion solution may then be filtered and the fat in the filter may be extracted with diethyl ether after a drying process. The solvent may be evaporated, and the mass of the dried residue may be determined gravimetrically. The fat content may be calculated from the difference between the initial sample weight and the weight of the sample at the end of the analysis. The fat used in the composition of the invention may be any type of suitable fat. The skilled person knows what type of fats may be used in the context of the current invention. Non-limitative, but in some embodiments preferred, examples of suitable fat source included fish oil, microbial oil, algal oil, and/or vegetable oils such as rapeseed oil and soy oil. As will be understood by the skilled person, such oils may be present in meals as well (e.g. algal meals). By mixing different fats it is possible within certain limits to achieve a desired fatty acid profile in the feed adapted to the species of aquatic organism the feed is intended for.

In some embodiments, the composition of the invention comprises phospholipids. Preferably, the composition comprises at least 5 wt.%, preferably at least 7.5 wt.%, preferably at least 10 wt.% phospholipids. Phospholipids are nutrients that are commonly used in a complete feed composition for (larvae of) fish and/or shrimp (see for example EP1171003). As a source of phospholipids, it is, for example, possible to use lecithin of vegetable origin, such as soya lecithin, or lecithin from other oil plants such as sunflower or rapeseed. The term lecithin designates lipid mixtures in which the phospholipids represent more than 50 wt.% of the total lipids. The classes of phospholipids most abundant in lecithin are phosphatidylcholine, phosphatidylethanolamine and phosphatidylinositol. The skilled person knows how to determine the phospholipid content in a feed composition. For example, the phospholipid content in the feed composition taught herein may be determined by a high resolution ³¹P-NMR spectroscopy method. This method is officially accepted by the International Lecithin and Phospholipid Society (ILPS) and American Oil Chemists' Society (AOCS).

Vegetable lecithin often also contain C18 fatty acids from the essential fatty acid series n-3 and n-6 (linoleic acid: 18: 2n-6 and linolenic acid: 18: 3n-3) but are generally devoid of polyunsaturated fatty acids in C20 and C22, in particular arachidonic acid (20: 4n-6), eicosapentaenoic acid (EPA, 20: 5n-3) and docosahexaenoic (DHA, 22: 6n-3). Polyunsaturated fatty acids in C20 and C22, in particular arachidonic acid (20: 4n-6), eicosapentaenoic acid (EPA, 20: 5n-3) and docosahexaenoic (DHA, 22: 6n-3 can be included in the aquaculture feed composition of the invention, for example using non-vegetal lecithin as a source.

In some embodiments, the aquaculture feed composition of the invention comprises starch. Preferably the composition comprises less than 16 wt.% starch. More preferably the composition comprises between 0 - 10 wt.% starch. Starch, as used in the feed composition of the invention, is an agent that is commonly used for binding, thickening, stiffening or gluing of material, for example for binding material together to form the pellets of the invention. As used herein, the pellets of the aquaculture feed composition can comprise starch as binding agent. The skilled person knows how to determine the starch content of a feed composition. For example, the method taught in NEN-ISO 15914:2004 may be used. This method is based on spectrometry. First, the soluble sugars may be removed from the feed composition by extracting the feed with 40% ethanol. The starch may be broken down into its glucose units with 90% DMSO and the enzyme mix amyloglucosidase/pancreatin. Glucose may subsequently be determined with a specific glucose-oxidase reaction kit on a spectrophotometer. The starch content may then be determined by multiplying the glucose content with a factor of 0.9.

The starch used in the composition of the invention may be any type of suitable starch. The skilled person knows what type of starches may be used in the context of the current invention. Non-limitative, but in some embodiments preferred, examples of suitable starch source included potato, wheat, cassava, corn. The starch may be naturally occurring or may be modified starch.

In some embodiments, the aquaculture feed composition of the invention comprises no more than between 1- 28 wt.% ash, preferably 4 - 22 wt.% ash. The skilled person knows how to determine the ash content of a feed composition. For example, the ash content may be determined gravimetrically, e.g., based on the NMKL method no. 23, 3rd edition, 1991. The percentage of ash may be determined based on the weight of the sample prior to burning, and how much ash (in weight) remains after burning said sample at a temperature of 555°C for 17 hours.

In some embodiments, the aquaculture feed composition of the invention comprises docosahexaenoic acid (DHA), preferably in the form of a DHA-comprising algae meal. Preferably, the composition comprises between 0.5 - 3.5 wt.% DHA and/or between 1.0 - 11.0 wt.% DHA-comprising algae meal. DHA is an omega-3 fatty acid which is directly derivable from natural sources, such as fish oil, algae oil or meal.

In some embodiments, the aquaculture feed composition of the invention comprises 6 - 12 wt.%, e.g., 7 - 11 wt.%, 8 - 10 wt.%, or 9 - 10 wt.%, on an as-is basis (i.e., based on the total weight of the feed composition) of moisture, i.e., water.

In some embodiments, the aquaculture feed composition of the invention is a complete feed composition, i.e. in principal provides all essential nutrients in order to sustain life of the aquatic animal for which the composition is intended. However, the aquaculture feed composition of the invention may also be an incomplete feed composition, and may, for example be combined with other feeds.

In some embodiments, the aquaculture feed composition taught herein comprises protein, fat, carbohydrates, vitamins, minerals, and water. Optionally, the aquaculture feed composition taught herein further comprises antioxidants, attractants, immunostimulatory substances, and/or pigments such as carotenoids, astaxanthin, or the like.

Also provided is for a set of aquaculture feed compositions of the invention wherein the set of feed compositions comprises at least a first aquaculture feed composition and a second aquaculture feed composition and wherein the pellet of the first aquaculture feed composition has a size that is different from the pellet of the second aquaculture feed composition, optionally wherein the set of aquaculture feed compositions comprises subsequent aquaculture feed compositions wherein the pellet of a subsequent feed composition has a size that is different from the size of another aquaculture feed composition in the set. The first and the second (or further) feed composition of the invention may have the same composition (ingredients) or the composition may be different. For example, the pellets of the first aquaculture feed composition may have a size (as defined herein) that is smaller than, more or less the same or greater than the size of the pellets of the second aquaculture feed composition.

For example, at least 10%, 20%, 30%, ...., 70%, 75%, 80%, 85%, 90%, 95% by weight of the pellets of the first aquaculture feed composition have a size of less than 400 micrometre, for example between 300-400 micrometre and at least 10%, 20%, 30%, ..., 70%, 75%, 80%, 85%, 90%, 95% by weight of the pellets of the second aquaculture feed composition have a size of less than 300 micrometre, for example between 200 - 300 micrometres. In one embodiment, the set of aquaculture feed compositions comprises at least two or three aquaculture feed compositions according to the invention with different size selected from the group consisting of a feed composition wherein more than 70% by weight of the pellets have a size between 0-100 micrometre, a feed composition wherein more than 70% by weight of the pellets have a size between 100-200 micrometre and a feed composition wherein more than 70% by weight of the pellets have a size between 200-350 micrometre.

It will be understood by the skilled person that such set of aquaculture feed compositions of the invention are in particular useful when rearing the aquatic animals over time. Depending on the development of the aquatic animal different sized aquaculture feed compositions of the invention may be used.

The aquaculture feed compositions of the invention may be used for fish and/or shrimp. Preferred fish that are provided with the composition of the invention include bass, seabream, flatfish, seriola, groupers, Meagre, and snappers; preferred shrimp include *Litopenaeus vannamei, Penaeus monodon, Penaeus japonicus, Penaeus merguiensis, Penaeus stylirostris, Penaeus indicus, Macrobrachium,* and crabs.

The skilled person understands that, in addition to the ingredients disclosed above, the composition of the invention may comprise other ingredients and nutrients as well. Non-limitative examples thereof include minerals and vitamins, carotenoids such as beta-carotene, astaxanthin, and lutein; aroma compounds; stabilisers; antimicrobial peptides; antibiotics, additional polyunsaturated fatty acids; enzymes such as phytase; nucleotides; prebiotics and/or probiotics.

Also provided is for a method of making, for example manufacturing, an aquaculture feed composition of the invention, wherein the method comprises admixing the different ingredients to obtain the aquaculture feed composition and preparing the composition in the form of a pellet.

In particular the method of making the aquaculture feed composition of the invention comprises admixing the ingredients that constitute the composition. Admixing may be by any suitable method known to the skilled person. After the ingredients of the composition of the invention are admixed, the thus obtained composition may be formed into the pellets as defined herein and by using any suitable method known to the skilled person. For example, the aquatic feed pellets of the invention may be extruded pellets and such extruded feed pellets may be produced by the method of the invention. The skilled person will understand that a pellet of the invention may also be provided by milling a pellet having a composition of the invention.

Also provided is for a non-therapeutic method of feeding a fish larvae or shrimp larvae, wherein the method comprises providing to the fish larvae and/or shrimp larvae one or more aquaculture feed compositions in the form of a granule having a size of less than 500 micrometre and in total comprising more than 60 wt.% protein and further comprising charcoal, a feed composition of the invention (i.e. in the form of a granule), and/or a set of aquaculture feed compositions of the invention. The skilled person knows how to feed a fish or shrimp larva with the composition of the invention (i.e. in the form of granules), for example by using automated or non-automated feeders and the like. The protein and charcoal, and optionally fat, carbohydrates such as starch, vitamins, minerals, and the like, may be provided in a single aquaculture feed composition as taught herein or may be provided in the form of two or more aquaculture feed compositions, one of which at least comprises (part of the) more than 60 wt.% protein, and the other of which at least comprises the charcoal. It will be obvious to the skilled person that the protein may be comprised in more than one aquaculture feed composition so long as the total diet provided to the fish larva or shrimp larva comprises more than 60 wt.% protein. The same may be true for the charcoal.

Also provided is for non-therapeutic use of an aquaculture feed composition of the invention (i.e. in the form of a granule) a set of an aquaculture feed composition feed compositions of the invention for feeding fish larvae and/or shrimp larvae, and/or for improving feed intake of the fish larvae and/or shrimp larvae. The feed composition of the invention may also be used as a feed for fish and/or shrimp larva, for preventing foam formation when the feed is introduced into the water comprising fish and/or shrimp larva intended to be fed.

Finally, there is also provided for an aquaculture feed composition in the form of a pellet, the pellet having a size of less than 500 micrometre, and wherein the aquaculture feed composition in the form of a pellet is obtained by admixing at least 60 wt.% crude protein and charcoal, and optionally other ingredients as disclosed herein, and preferably in the amounts as disclosed herein, in order to obtain a non-pelleted composition of the invention and forming the obtained non-pelleted into a pellet having a size of less than 500 micrometre. Also is provided for the use of the thus obtained composition of the invention as disclosed herein.

It is also described a method for making an aquaculture feed with an improved free flowing characteristic, the method may comprise to admix an aquaculture feed composition comprising more than 60 wt.% protein and further comprising charcoal and form the composition to pellets. The pellets may form less dust and may show a higher homogeneity of the pellets compared to known pellets, which improve the free flow characteristic and reduce clogging in feeders.

The composition may comprise at least 0.1 wt.% charcoal, at least 0.5 wt.% charcoal, at least 1.0 wt.% charcoal, at least 1.5 wt.% charcoal, or at least 2.2 wt.% charcoal. The composition may comprise less than 11 wt.% charcoal or less than 8 wt.% charcoal. The composition may comprise more than 62 wt.% protein. The composition may comprise less than 85 wt.% protein, less than 75 wt.% protein, or less than 70 wt.% protein. The composition may comprise less than 27 wt.% fat. The composition may comprise between 5 - 22 wt.% fat, or between 8 - 20 wt.% fat. Each pellet may have a size of less than 500 micrometre.

It is also described a method for making an aquaculture feed with a reduced foam formation characteristic, the method may comprise to admix an aquaculture feed composition comprising more than 60 wt.% protein and further comprising charcoal and form the composition to pellets.

The composition may comprise at least 0.1 wt.% charcoal, at least 0.5 wt.% charcoal, at least 1.0 wt.% charcoal, at least 1.5 wt.% charcoal, or at least 2.2 wt.% charcoal. The composition may comprise less than 11 wt.% charcoal or less than 8 wt.% charcoal. The composition may comprise more than 62 wt.% protein. The composition may comprise less than 85 wt.% protein, less than 75 wt.% protein, or less than 70 wt.% protein. The composition may comprise less than 27 wt.% fat. The composition may comprise between 5 - 22 wt.% fat, or between 8 - 20 wt.% fat. Each pellet may have a size of less than 500 micrometre.

It is also described a method for making an aquaculture feed with a reduced sinking speed and/or sinking time characteristic, the method may comprise to admix an aquaculture feed composition comprising more than 60 wt.% protein and further comprising charcoal and form the composition to pellets.

The composition may comprise at least 0.1 wt.% charcoal, at least 0.5 wt.% charcoal, at least 1.0 wt.% charcoal, at least 1.5 wt.% charcoal, or at least 2.2 wt.% charcoal. The composition may comprise less than 11 wt.% charcoal or less than 8 wt.% charcoal. The composition may comprise more than 62 wt.% protein. The composition may comprise less than 85 wt.% protein, less than 75 wt.% protein, or less than 70 wt.% protein. The composition may comprise less than 27 wt.% fat. The composition may comprise between 5 - 22 wt.% fat, or between 8 - 20 wt.% fat. Each pellet may have a size of less than 500 micrometers.

In an aspect, the present disclosure provides a method of improving rearing of fish and/or shrimp larvae, said method comprising the step of administering to fish and/or shrimp larvae an aquaculture feed composition as taught herein. More particular, the present disclosure provides a method of enhancing weaning flexibility in the rearing process for fish and/or shrimp larvae; of improving water quality in the rearing process for fish and/or shrimp larvae; and of simplifying operations in the rearing process for fish and/or shrimp larvae, said method comprising the step of administering to fish and/or shrimp larvae an aquaculture feed composition as taught herein.

In an embodiment, the present disclosure provides a method of increasing survival of fish and/or shrimp larvae, increasing biomass production of fish and/or shrimp larvae, increasing feed intake in fish and/or shrimp larvae and/or speed of feed intake in fish and/or shrimp larvae, enhancing weaning flexibility in the rearing of fish and/or shrimp larvae, improving water quality in the rearing of fish and/or shrimp larvae, reducing leaching of feed components into the water in the rearing of fish and/or shrimp larvae, reducing dust content in feed in the rearing of fish and/or shrimp larvae, reducing foam formation in the rearing of fish and/or shrimp larvae, reducing loading in surface skimmers in the rearing of fish and/or shrimp larvae, increasing homogeneity of feed distribution throughout the water in the rearing of fish and/or shrimp larvae, enhancing free-flowing properties in the rearing of fish and/or shrimp larvae, reducing clogging of feed in feeders in the rearing of fish and/or shrimp larvae, and for improving accuracy and consistency of feed delivery in the rearing of fish and/or shrimp larvae, said method comprising the step of administering to fish and/or shrimp larvae an aquaculture feed composition as taught herein to fish and/or shrimp larvae.

Having now generally described the invention, the same will be more readily understood through reference to the following examples which is provided by way of illustration and is not intended to be limiting of the invention.

### Brief description of drawings

Embodiments of the invention are further described hereinafter with reference to the accompanying drawings, in which:
Fig.1: Survival and Biomass at PL12 in shrimp larvae fed with a diet with and without charcoal;
Fig. 2: Percentage of seabream larvae having diet in the gut for diets containing charcoal compared to diets with no added charcoal;
Fig. 3: Effect of a diet containing charcoal on the survival of seabream larvae;
Fig. 4: Effect on foam formation of diets containing charcoal (carbon);
Fig. 5: Cumulative feed clumping in g, the graph shows amount of feed that did not pass feeders, the graph is a composite graph of increasing feed particle sizes;
Fig. 6: Size distribution (µm) improvement during sieving due to charcoal addition; and
Fig. 7: Position of the pellets in the water column after 10 min.

### Examples

**Example 1:** Preparation of an aquaculture feed composition of the invention. The ingredients of Table 1 were milled to an average particle size of 150 micrometre and extruded to a 2 mm pellet, that was subsequently further crumbled/granulated into smaller particles and sieved to the following respective sizes: size#0 (<100µm), size#1 (100-200µm) and size#2 (201-350µm). Crude protein content of the finished diet was 62 ± 2 wt.% based on total weight of the feed composition. Fat content was 12 ± 2 wt.% based on total weight of the feed composition. Moisture content was 8 wt.% based on total weight of the feed composition.

**Table 1: Examples of compositions containing fish oil, algae and charcoal (expressed by wt.% based on total weight of the feed composition (including 8 wt.% moisture)).**

| | Diet (%) | |
|---|---|---|
| | A | B |
| Marine protein (fish meal, krill, squid) | 50.00 | 49.02 |
| Vegetable and algal protein | 9.00 | 8.82 |
| Oil (fish oil, algae oil, vegetal oil) | 10.00 | 9.80 |
| Hydrolysates (marine source) | 18.00 | 17.62 |
| Lecithin | 4.00 | 3.92 |
| Starch and vegetable fibres | 5.00 | 4.90 |
| Premixes (minerals, vitamins) | 4.00 | 3.92 |
| Carbon (charcoal) | | 2.00 |

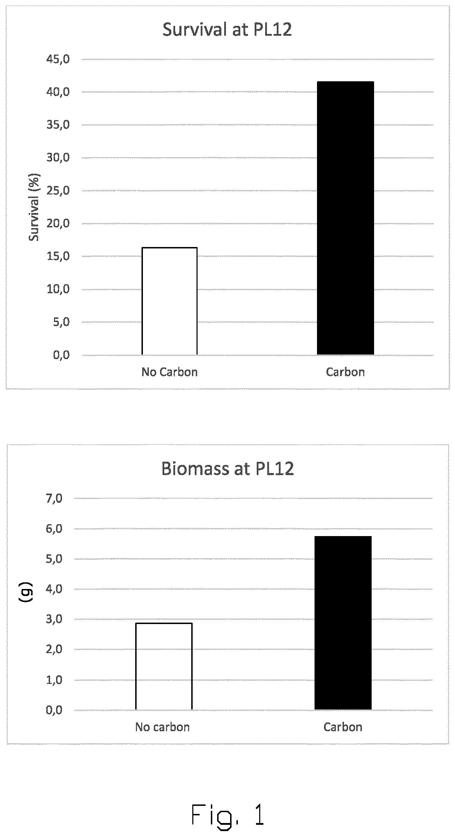

**Example 2:** The size classes <100µm, 100-200µm and 201-350µm of the feeds A and B prepared in Example 1 were fed manually 21 times per day to *P. vannamei* during the development stages from Zoea, Mysis and PL5 onwards, respectively. In addition to the feeds of Example 1, Artemia was also fed 6 times a day from Mysis stage onwards till PL12. Shrimp were harvested at PL12. The shrimp were reared in 60 I tanks at a density of 140 animals per litre with 4 replicates per treatment. The diet was fed manually 21 times a day. Figure 1 shows that a much better survival and biomass production was obtained at PL12 for the diet supplemented with charcoal. An increased biomass production allows for weaning flexibility.

**Example 3:** Testing of an aquaculture feed composition of the invention in seabream larvae (*Sparus aurata*) on feed intake and survival.

The seabream trial was conducted in 400 I tanks with 3 replicates. The initial stocking density was 40 larvae per litre with 17 day old larvae previously reared on rotifers. The fish larvae received rotifers from day 18 to day 30, together with either diet C or diet D (C and D being similar to diets A and B of Example 1, respectively, except that phospholipid inclusion was 7 wt% rather than 4 wt% based on total weight of the diet, and the starch/fiber content was decreased by 1 wt% and protein content was decreased by 2 wt%, both based on total weight of the diet. Charcoal was included in diet D in an amount of 2 wt% based on the total weight of the diet). The diets (size 0, 1 and 2) were distributed using automatic feeders. The latter were adjusted to distribute the total same amount per hour for diets C and D.

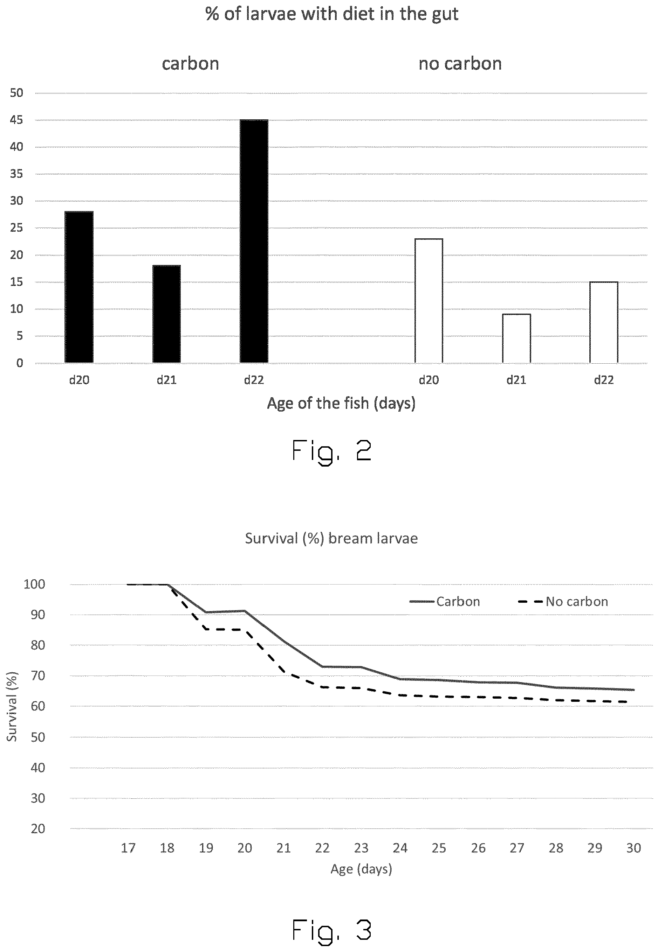

Surprisingly, the fish on the diet supplemented with charcoal (diet D) showed a higher incidence of diet in their digestive system during the period of first feeding, i.e., the number of larvae ingesting feed was increased for diet D compared to diet C, especially at the onset of feeding of the dry diet (Figure 2). Surprisingly, the fish larvae receiving the charcoal containing diet D displayed increased survival during the complete duration of the test (Figure 3; "carbon" vs "no carbon").

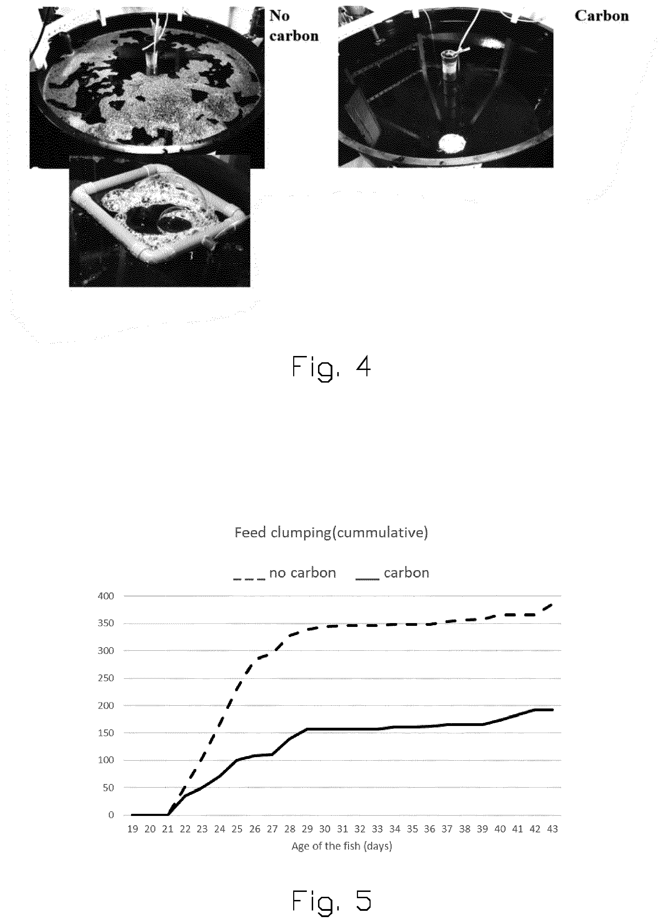

**Example 4:** A common problem known in the art of aquaculture feed compositions is that high weight percentages of protein or crude protein of said compositions give rise to substantial foam formation on the water surface, leading to a further negative impact on (larvae of) fish and/or shrimp larvae in the water column. Surprisingly, it was found that feeding the aquaculture feed composition of the invention did not or only to a limited extent result in foam formation on the water surface, despite the high weight percentages of protein of the feed. The applicant found that adding certain amount of the aquaculture feed composition according to the invention to the water in the basins wherein fish and/or shrimp larvae are held and grown resulted in (almost) no foam formation on the surface, hence not requiring the use of skimmers at the water surface. In Figure 4 the results are shown for a composition of the invention comprising about 2.5 wt.% charcoal (carbon) (on as is basis) and a comparable composition without added charcoal. Moreover, it was found that the use of charcoal (e.g., vegetal carbon) in the composition of the invention had advantages in sieving properties leading to diets that are more homogenous in size. It was found that in the feeders, the diet containing charcoal was less sticky and more free flowing. This resulted in higher outputs in sieving capacity (Figure 5). It was also found that the aquaculture feed composition of the invention improved the release of the aquaculture feed composition per feeding event from feeders. It was found that the aquaculture feed composition of the invention resulted in less clogging of the feeder during a feeding event when compared to a preceding standard aquaculture feed composition. In one particular example, as also exemplified here below in Table 2, the aquaculture feed composition of the invention (BD) improved feed distribution (i.e. release per feeding event (in g)) from the feeder by about 10% when compared to a prior art aquaculture feed composition (control) but not according to the invention.

**Table 2: Feed size 100-200 µm) distribution from the feeder**

| | Amount released per feeding event (g) |
|---|---|
| Control diet | 0.207 |
| Diet with charcoal | 0.221 |

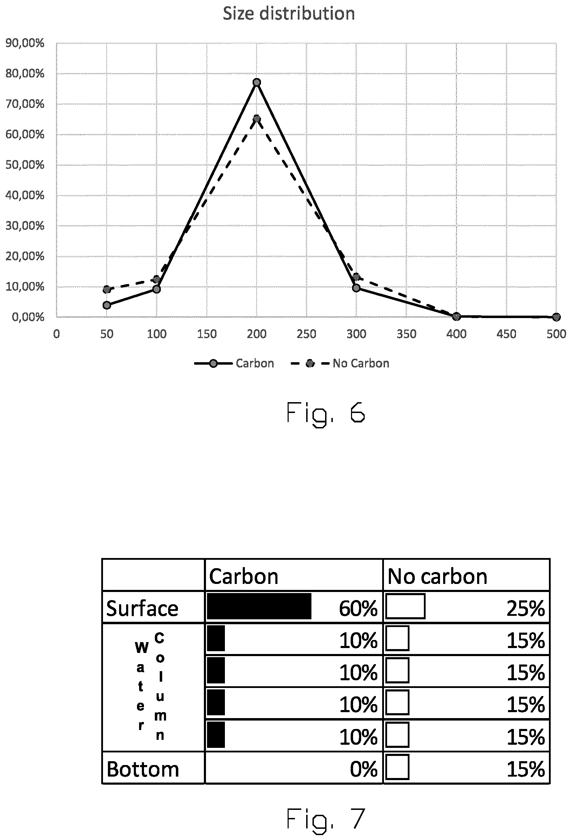

The aquaculture feed composition of the invention resulted in better and more constant feed delivery when using automatic feeding devices. Diets with charcoal caused less clogging and allowed higher amounts of feed released per feeding event compared to comparable diets without charcoal, i.e., allowed increased and consistent feeding. Moreover, it was observed that the larval feeds containing charcoal spread out more homogenously throughout the water. Analyses on the particle size distribution of the particles showed a higher homogeneity in the size class available to the fish. Moreover, the diet containing charcoal contained significantly less dust and approximately 10% more particles available for the fish (see Figure 6). The reduced dust content contributed to a better water quality with less foam formation. Further, diets containing charcoal displayed reduced leaching of feed components into the water.

The charcoal in the composition of the invention also affected the physical characteristics of the diet. Surprisingly the buoyancy of the diets with charcoal was changed compared to the buoyancy of comparable diets without charcoal. After 10 min sedimentation in a 1m long cylindrical column, more particles of the charcoal diet were present at the water surface. The diet containing no charcoal showed 15% of the particles on the bottom, whereas the charcoal containing diet showed more particles floating at the surface of the water column (see Figure 7). Particles on the bottom are not consumed by the larvae and are lost to the larvae, while particles at the surface will eventually absorb sufficient water to slowly sink and become available in the water column. This will create a continuous and longer availability of particles in the water column at all times.

## Claims

1. An aquaculture feed composition in the form of a granule for feeding fish larvae and shrimp larvae, the granule having a size of less than 500 micrometre, and wherein the composition comprises more than 60 wt.% protein and further comprises charcoal.

2. The aquaculture feed composition of claim 1 wherein the composition comprises at least 0.1 wt.% charcoal, at least 0.5 wt.% charcoal, at least 1.0 wt.% charcoal, at least 1.5 wt.% charcoal, or at least 2.2 wt.% charcoal.

3. The aquaculture feed composition of any one of the previous claims wherein the composition comprises less than 11 wt.% charcoal or less than 8 wt.% charcoal.

4. The aquaculture feed composition of any one of the previous claims wherein the composition comprises more than 62 wt.% protein.

5. The aquaculture feed composition of any one of the previous claims wherein the composition comprises less than 85 wt.% protein, less than 75 wt.% protein, or less than 70 wt.% protein.

6. The aquaculture feed composition of any one of the previous claims wherein the composition comprises less than 27 wt.% fat.

7. The aquaculture feed composition of any one of the previous claims wherein the composition comprises between 5 - 22 wt.% fat, or between 8 - 20 wt.% fat.

8. The aquaculture feed composition of any of the preceding claims, wherein the composition comprises at least 4 wt.%, preferably at least 7.5 wt.%, preferably at least 10 wt.% phospholipids.

9. The aquaculture feed composition of any one of the previous claims wherein the composition comprises less than 16 wt.% starch.

10. The aquaculture feed composition of any one of the previous claims wherein the composition comprises between 0 - 10 wt.% starch.

11. The aquaculture feed composition of any one of the previous claims wherein the composition comprises between 1-28 wt.% ash or between 4-22 wt.% ash.

12. The aquaculture feed composition of any one of the previous claims wherein the composition comprises docosahexaenoic acid (DHA), preferably in the form of a DHA-comprising algae meal.

13. The aquaculture feed composition of any one of the previous claims wherein the composition comprises between 0.5 - 3.5 wt.% DHA and/or between 1.0 - 11.0 wt.% DHA-comprising algae meal.

14. The aquaculture feed composition of any one of the previous claims wherein the composition further comprises defatted fishmeal, preferably wherein the composition comprises defatted fishmeal and DHA-comprising algae meal.

15. The aquaculture feed composition of any one of the previous claims wherein the composition is a complete feed composition.

16. A set of aquaculture feed compositions of any one of the previous claims wherein the set of feed compositions comprises at least a first aquaculture feed composition and a second aquaculture feed composition and wherein the granule of the first aquaculture feed composition has a size that is different from the granule of the second aquaculture feed composition, optionally wherein the set of aquaculture feed compositions comprises subsequent aquaculture feed compositions wherein the granule of a subsequent feed composition has a size that is different from the size of another aquaculture feed composition in the set.

17. A method of making an aquaculture feed composition as claimed in any one of the previous claims, wherein the method comprises admixing the different ingredients to obtain the aquaculture feed composition and preparing the composition in the form of a granule.

18. A non-therapeutic method of feeding fish larvae or shrimp larvae, wherein the method comprises providing to the fish larvae and/or shrimp larvae one or more aquaculture feed compositions in the form of a granule having a size of less than 500 micrometre and in total comprising more than 60 wt.% protein and further comprising charcoal, a feed composition of any one of the previous claims 1 to 15, or a set of aquaculture feed compositions of claim 16.

19. Non-therapeutic use of an aquaculture feed composition of any one of the previous claims 1 to 15 or a set of an aquaculture feed composition feed compositions of claim 16 for feeding of fish larvae and/or shrimp larvae, and/or for improving feed intake of fish larvae and/or shrimp larvae.

20. An aquaculture feed composition in the form of a granule, according to claim 1, the granule having a size of less than 500 micrometre, and wherein the aquaculture feed composition in the form of a granule is obtained by admixing at least 60 wt.% protein and charcoal, and optionally other ingredients, in order to obtain a non-pelleted composition of the invention and forming the obtained non-pelleted composition into a granule having a size of less than 500 micrometre.

21. A non-therapeutic method of
- increasing biomass production of fish larvae and/or shrimp larvae,
- increasing feed intake in fish larvae and/or shrimp larvae and/or speed of feed intake in fish larvae and/or shrimp larvae,
- enhancing weaning flexibility in the rearing of fish larvae and/or shrimp larvae,
- improving water quality in the rearing of fish larvae and/or shrimp larvae, reducing leaching of feed components into the water in the rearing of fish larvae and/or shrimp larvae,
- reducing dust content in feed in the rearing of fish larvae and/or shrimp larvae,
- reducing foam formation in the rearing of fish larvae and/or shrimp larvae, reducing loading in surface skimmers in the rearing of fish larvae and/or shrimp larvae,
- increasing homogeneity of feed distribution throughout the water in the rearing of fish larvae and/or shrimp larvae,
- enhancing free-flowing properties in the rearing of fish larvae and/or shrimp larvae,
- reducing clogging of feed in feeders in the rearing of fish larvae and/or shrimp larvae, and
- improving accuracy and consistency of feed delivery in the rearing of fish larvae and/or shrimp larvae, said method comprising the step of administering an aquaculture feed according to any one of claims 1 to 15 to fish larvae and/or shrimp larvae.

22. An aquaculture feed composition of any one of claims 1 to 15 or a set of an aquaculture feed composition of feed compositions of claim 16 for use in increasing survival of fish larvae and/or shrimp larvae.

## Patentansprüche

1. Aquakultur-Futterzusammensetzung in Form eines Granulats zur Fütterung von Fischlarven und Garnelenlarven, wobei das Granulat eine Größe von weniger als 500 Mikrometer aufweist, und wobei die Zusammensetzung mehr als 60 Gewichtsprozent Protein und weiter Aktivkohle umfasst.

2. Aquakultur-Futterzusammensetzung nach Anspruch 1 wobei die Zusammensetzung mindestens 0,1 Gewichtsprozent Aktivkohle, mindestens 0,5 Gewichtsprozent Aktivkohle, mindestens 1,0 Gewichtsprozent Aktivkohle, mindestens 1,5 Gewichtsprozent Aktivkohle oder mindestens 2,2 Gewichtsprozent Aktivkohle umfasst.

3. Aquakultur-Futterzusammensetzung nach einem der vorstehenden Ansprüche wobei die Zusammensetzung weniger als 11 Gewichtsprozent Aktivkohle oder weniger als 8 Gewichtsprozent Aktivkohle umfasst.

4. Aquakultur-Futterzusammensetzung nach einem der vorstehenden Ansprüche wobei die Zusammensetzung mehr als 62 Gewichtsprozent Protein umfasst.

5. Aquakultur-Futterzusammensetzung nach einem der vorstehenden Ansprüche wobei die Zusammensetzung weniger als 85 Gewichtsprozent Protein, weniger als 75 Gewichtsprozent Protein oder weniger als 70 Gewichtsprozent Protein umfasst.

6. Aquakultur-Futterzusammensetzung nach einem der vorstehenden Ansprüche wobei die Zusammensetzung weniger als 27 Gewichtsprozent Fett umfasst.

7. Aquakultur-Futterzusammensetzung nach einem der vorstehenden Ansprüche wobei die Zusammensetzung zwischen 5-22 Gewichtsprozent Fett oder zwischen 8-20 Gewichtsprozent Fett umfasst.

8. Aquakultur-Futterzusammensetzung nach einem der vorstehenden Ansprüche wobei die Zusammensetzung mindestens 4 Gewichtsprozent, bevorzugt mindestens 7,5 Gewichtsprozent, bevorzugt mindestens 10 Gewichtsprozent Phospholipide umfasst.

9. Aquakultur-Futterzusammensetzung nach einem der vorstehenden Ansprüche wobei die Zusammensetzung weniger als 16 Gewichtsprozent Stärke umfasst.

10. Aquakultur-Futterzusammensetzung nach einem der vorstehenden Ansprüche wobei die Zusammensetzung zwischen 0-10 Gewichtsprozent Stärke umfasst.

11. Aquakultur-Futterzusammensetzung nach einem der vorstehenden Ansprüche wobei die Zusammensetzung zwischen 1-28 Gewichtsprozent Asche oder zwischen 4-22 Gewichtsprozent Asche umfasst.

12. Aquakultur-Futterzusammensetzung nach einem der vorstehenden Ansprüche wobei die Zusammensetzung Docosahexaensäure (DHA) umfasst, bevorzugt in der Form eines DHA-umfassenden Algenmehls.

13. Aquakultur-Futterzusammensetzung nach einem der vorstehenden Ansprüche wobei die Zusammensetzung zwischen 0,5-3,5 Gewichtsprozent DHA und/oder zwischen 1,0-11,0 Gewichtsprozent DHA-umfassendes Algenmehl umfasst.

14. Aquakultur-Futterzusammensetzung nach einem der vorstehenden Ansprüche wobei die Zusammensetzung weiter entfettetes Fischmehl umfasst, bevorzugt wobei die Zusammensetzung entfettetes Fischmehl und DHA-umfassendes Algenmehl umfasst.

15. Aquakultur-Futterzusammensetzung nach einem der vorstehenden Ansprüche wobei die Zusammensetzung eine Alleinfutterzusammensetzung ist.

16. Set von Aquakultur-Futterzusammensetzungen nach einem der vorstehenden Ansprüche wobei das Set von Futterzusammensetzungen mindestens eine erste Aquakultur-Futterzusammensetzung und eine zweite Aquakultur-Futterzusammensetzung umfasst und wobei das Granulat der ersten Aquakultur-Futterzusammensetzung eine Größe aufweist, die sich von der des Granulats der zweiten Aquakultur-Futterzusammensetzung unterscheidet, optional wobei das Set von Aquakultur-Futterzusammensetzungen nachfolgende Aquakultur-Futterzusammensetzungen umfasst, wobei das Granulat einer nachfolgenden Futterzusammensetzung eine Größe aufweist, die sich von der Größe einer anderen Aquakultur-Futterzusammensetzung in dem Set unterscheidet.

17. Verfahren zur Herstellung einer Aquakultur-Futterzusammensetzung wie in einem der vorstehenden Ansprüche beansprucht, wobei das Verfahren das Mischen der verschiedenen Inhaltsstoffe zum Erhalt der Aquakultur-Futterzusammensetzung und die Herstellung der Zusammensetzung in Form eines Granulats umfasst.

18. Nicht-therapeutisches Verfahren zur Fütterung von Fischlarven oder Garnelenlarven, wobei das Verfahren das Bereitstellen einer oder mehrerer Aquakultur-Futterzusammensetzungen in Form eines Granulats mit einer Größe von weniger als 500 Mikrometern, das insgesamt mehr als 60 Gewichtsprozent Protein umfasst, an die Fischlarven und/oder Garnelenlarven umfasst und wobei die Futterzusammensetzung weiter Aktivkohle umfasst, eine Futterzusammensetzung nach einem der vorstehenden Ansprüche 1 bis 15, oder ein Set von Aquakultur-Futterzusammensetzungen nach Anspruch 16.

19. Nicht-therapeutische Verwendung einer Aquakultur-Futterzusammensetzung nach einem der vorstehenden Ansprüche 1 bis 15 oder eines Sets von Aquakultur-Futterzusammensetzungen nach Anspruch 16 zur Fütterung von Fischlarven und/oder Garnelenlarven und/oder zur Verbesserung der Futteraufnahme von Fischlarven und/oder Garnelenlarven.

20. Aquakultur-Futterzusammensetzung in Form eines Granulats nach Anspruch 1, wobei das Granulat eine Größe von weniger als 500 Mikrometern aufweist, und wobei die Aquakultur-Futterzusammensetzung in Form eines Granulats durch Mischen von mindestens 60 Gewichtsprozent Protein und Aktivkohle und optional anderen Inhaltsstoffen erhalten wird, um eine nicht-pelletierte Zusammensetzung der Erfindung zu erhalten, und die erhaltene nicht-pelletierte Zusammensetzung zu einem Granulat mit einer Größe von weniger als 500 Mikrometern geformt wird.

21. Nicht-therapeutisches Verfahren des
- Erhöhens der Biomasseproduktion von Fischlarven und/oder Garnelenlarven,
- Erhöhens der Futteraufnahme bei Fischlarven und/oder Garnelenlarven und/oder der Geschwindigkeit der Futteraufnahme bei Fischlarven und/oder Garnelenlarven,
- Verbesserns der Entwöhnungsflexibilität bei der Aufzucht von Fischlarven und/oder Garnelenlarven,
- Verbesserns der Wasserqualität bei der Aufzucht von Fischlarven und/oder Garnelenlarven, Verringerns der Auswaschung von Futtermittelbestandteilen in das Wasser bei der Aufzucht von Fischlarven und/oder Garnelenlarven,
- Reduzierens des Staubgehalts in dem Futtermittel bei der Aufzucht von Fischlarven und/oder Garnelenlarven,
- Reduzierens der Schaumbildung bei der Aufzucht von Fischlarven und/oder Garnelenlarven,
Reduzierens der Belastung von Oberflächenskimmern bei der Aufzucht von Fischlarven und/oder Garnelenlarven,
- Erhöhens der Homogenität der Futtermittelverteilung in dem Wasser bei der Aufzucht von Fischlarven und/oder Garnelenlarven,
- Verbesserns der Freiströmeigenschaften bei der Aufzucht von Fischlarven und/oder Garnelenlarven,
- Verringerns der Verstopfung von Futtermitteln in Futterautomaten bei der Aufzucht von Fischlarven und/oder Garnelenlarven, und
- Verbesserns der Genauigkeit und Konsistenz der Futtermittelabgabe bei der Aufzucht von Fischlarven und/oder Garnelenlarven,
wobei das Verfahren den Schritt der Verabreichung eines Aquakultur-Futtermittels nach einem der Ansprüche 1 bis 15 an Fischlarven und/oder Garnelenlarven umfasst.

22. Aquakultur-Futterzusammensetzung nach einem der Ansprüche 1 bis 15 oder Set einer Aquakultur-Futterzusammensetzung von Futterzusammensetzungen nach Anspruch 16 zur Verwendung bei der Erhöhung der Überlebensrate von Fischlarven und/oder Garnelenlarven.

## Revendications

1. Composition d'aliment pour aquaculture sous la forme d'un granulé destiné à l'alimentation de larves de poisson et de larves de crevettes, le granulé présentant une taille de moins de 500 micromètres, et dans laquelle la composition comprend plus de 60 % en poids de protéines et comprend en outre du charbon.

2. Composition d'aliment pour aquaculture selon la revendication 1 dans laquelle la composition comprend au moins 0,1 % en poids de charbon, au moins 0,5 % en poids de charbon, au moins 1,0 % en poids de charbon, au moins 1,5 % en poids de charbon, ou au moins 2,2 % en poids de charbon.

3. Composition d'aliment pour aquaculture selon l'une quelconque des revendications précédentes dans laquelle la composition comprend moins de 11 % en poids de charbon ou moins de 8 % en poids de charbon.

4. Composition d'aliment pour aquaculture selon l'une quelconque des revendications précédentes dans laquelle la composition comprend plus de 62 % en poids de protéines.

5. Composition d'aliment pour aquaculture selon l'une quelconque des revendications précédentes dans laquelle la composition comprend moins de 85 % en poids de protéines, moins de 75 % en poids de protéines, ou moins de 70 % en poids de protéines.

6. Composition d'aliment pour aquaculture selon l'une quelconque des revendications précédentes dans laquelle la composition comprend moins de 27 % en poids de matières grasses.

7. Composition d'aliment pour aquaculture selon l'une quelconque des revendications précédentes dans laquelle la composition comprend entre 5-22 % en poids de matières grasses, ou entre 8-20 % en poids de matières grasses.

8. Composition d'aliment pour aquaculture selon l'une quelconque des revendications précédentes, dans laquelle la composition comprend au moins 4 % en poids, de préférence au moins 7,5 % en poids, de préférence au moins 10 % en poids de phospholipides.

9. Composition d'aliment pour aquaculture selon l'une quelconque des revendications précédentes dans laquelle la composition comprend moins de 16 % en poids d'amidon.

10. Composition d'aliment pour aquaculture selon l'une quelconque des revendications précédentes dans laquelle la composition comprend entre 0-10 % en poids d'amidon.

11. Composition d'aliment pour aquaculture selon l'une quelconque des revendications précédentes dans laquelle la composition comprend entre 1-28 % en poids de cendres ou entre 4-22 % en poids de cendres.

12. Composition d'aliment pour aquaculture selon l'une quelconque des revendications précédentes dans laquelle la composition comprend un acide docosahexaénoïque (DHA), de préférence sous la forme d'une farine d'algues comprenant un DHA.

13. Composition d'aliment pour aquaculture selon l'une quelconque des revendications précédentes dans laquelle la composition comprend entre 0,5-3,5 % en poids de DHA et/ou entre 1,0-11,0 % en poids de farine d'algues comprenant un DHA.

14. Composition d'aliment pour aquaculture selon l'une quelconque des revendications précédentes dans laquelle la composition comprend en outre de la farine de poisson dégraissée, de préférence dans laquelle la composition comprend de la farine de poisson dégraissée et une farine d'algues comprenant un DHA.

15. Composition d'aliment pour aquaculture selon l'une quelconque des revendications précédentes dans laquelle la composition est une composition d'aliment complète.

16. Ensemble de compositions d'aliment pour aquaculture selon l'une quelconque des revendications précédentes dans lequel l'ensemble de compositions d'aliment comprend au moins une première composition d'aliment pour aquaculture et une seconde composition d'aliment pour aquaculture et dans lequel le granulé de la première composition d'aliment pour aquaculture présente une taille qui est différente du granulé de la seconde composition d'aliment pour aquaculture, facultativement dans lequel l'ensemble de compositions d'aliment pour aquaculture comprend des compositions ultérieures d'aliment pour aquaculture dans lequel le granulé d'une composition d'aliment ultérieure présente une taille qui est différente de la taille d'une autre composition d'aliment pour aquaculture dans l'ensemble.

17. Procédé destiné à fabriquer une composition d'aliment pour aquaculture selon l'une quelconque des revendications précédentes, dans lequel le procédé comprend un mélange des différents ingrédients pour obtenir la composition d'aliment pour aquaculture et une préparation de la composition sous la forme d'un granulé.

18. Procédé non-thérapeutique destiné à alimenter des larves de poisson ou des larves de crevettes, dans lequel le procédé comprend le fait de fournir aux larves de poisson et/ou larves de crevettes une ou plusieurs compositions d'aliment pour aquaculture sous la forme d'un granulé présentant une taille de moins de 500 micromètres et au total comprenant plus de 60 % en poids de protéines et comprenant en outre du charbon, une composition d'aliment selon l'une quelconque des revendications précédentes 1 à 15, ou un ensemble de compositions d'aliment pour aquaculture selon la revendication 16.

19. Utilisation non-thérapeutique d'une composition d'aliment pour aquaculture selon l'une quelconque des revendications précédentes 1 à 15 ou d'un ensemble de compositions d'aliment d'une composition d'aliment pour aquaculture selon la revendication 16 destiné à l'alimentation de larves de poisson et/ou larves de crevettes, et/ou destiné à l'amélioration de la prise d'aliments de larves de poisson et/ou de larves de crevettes.

20. Composition d'aliment pour aquaculture sous la forme d'un granulé, selon la revendication 1, le granulé présentant une taille de moins de 500 micromètres, et dans laquelle la composition d'aliment pour aquaculture sous la forme d'un granulé est obtenue en mélangeant au moins 60 % en poids de protéines et de charbon, et facultativement d'autres ingrédients, afin d'obtenir une composition non-agglomérée selon l'invention et en formant la composition non agglomérée obtenue en un granulé présentant une taille de moins de 500 micromètres.

21. Procédé non thérapeutique pour
- augmenter la production de biomasse de larves de poisson et/ou de larves de crevettes,
- augmenter la prise d'aliments de larves de poisson et/ou de larves de crevettes et/ou la vitesse de la prise d'aliments des larves de poisson et/ou des larves de crevettes,
- améliorer la flexibilité de sevrage dans l'élevage de larves de poisson et/ou de larves de crevettes,
- améliorer la qualité de l'eau dans l'élevage de larves de poisson et/ou de larves de crevettes, réduire la lixiviation de composants d'aliment dans l'eau dans l'élevage de larves de poisson et/ou de larves de crevettes,
- réduire la teneur en poussière dans les aliments dans l'élevage de larves de poisson et/ou de larves de crevettes,
- réduire la formation de mousse dans l'élevage de larves de poisson et/ou de larves de crevettes,
réduire la charge d'écumeurs en surface dans l'élevage de larves de poisson et/ou de larves de crevettes,
- augmenter l'homogénéité de la distribution d'aliments dans toute l'eau dans l'élevage de larves de poisson et/ou larves de crevettes,
- améliorer les propriétés de fluidisation dans l'élevage de larves de poisson et/ou larves de crevettes,
- réduire l'obstruction d'aliments dans des distributeurs dans l'élevage de larves de poisson et/ou de larves de crevettes, et
- améliorer la précision et la consistance de la fourniture d'aliments dans l'élevage de larves de poisson et/ou de larves de crevettes,
ledit procédé comprenant l'étape consistant à administrer un aliment d'aquaculture selon l'une quelconque des revendications 1 à 15 à des larves de poisson et/ou des larves de crevettes.

22. Composition d'aliments pour aquaculture selon l'une quelconque des revendications 1 à 15 ou ensemble d'une composition d'aliments pour aquaculture de compositions d'aliments selon la revendication 16 destiné(e) à une utilisation pour augmenter la survie de larves de poisson et/ou larves de crevettes.
